# DEMANDE DE BREVET EUROPEEN

(11) **EP 0 750 847 A1**
(43) Date de publication de la demande: **02.01.1997**
(21) Numéro de dépôt: 96401306.4
(22) Date de dépôt: 14.06.1996
(51) Int. Cl.: A23K 1/16, A23K 1/00

(54) **Nouveau mélange en poudre ne dégageant pas de poussières, utilisable en alimentation animale et son procédé de préparation**

(30) Priorité: 29.06.1995 FR 9507862
(71) Demandeur: GEVA, 75015 Paris (FR)
(72) Inventeur: Bourez, Geneviève, 75015 Paris (FR)
(74) Mandataire: Keib, Gérard

(57) **Abrégé**

L'invention concerne un nouveau mélange en poudre, destiné exclusivement à la fabrication industrielle d'aliments composés pour les animaux, comprenant une substance active pulvérulente, organique ou inorganique, mise sur un support dont les particules ont une densité et une granulométrie homogènes, qui a une bonne fluidité, et qui ne dégage pas de poussières, et caractérisé en ce qu'il comprend de plus une solution aqueuse d'un ou plusieurs produits anti-poussières, choisis parmi les produits autorisés en alimentation animale, qui ne sont ni des lipides, ni des glucides, ni des tensio-actifs, ni des émulsifiants.

## Description

L'invention se rapporte à un nouveau mélange en poudre, qui est une substance active pulvérulente, organique ou inorganique, mise sur un support dont les particules ont une densité et une granulométrie homogènes, qui a une bonne fluidité, et qui ne dégage pas de poussières.

L'invention se rapporte également à un nouveau procédé de préparation dudit produit.

Le produit concerné par l'invention est destiné exclusivement à la fabrication industrielle d'aliments composés pour les animaux.

On utilise fréquemment de tels mélanges en poudre dans l'industrie de la fabrication des aliments pour animaux.

Le composant actif de ces produits est généralement incorporé à très faible dose si on se réfère à l'aliment complet susceptible de couvrir l'intégralité des besoins nutritionnels de l'animal.

Les taux varient de quelques ppm, ou partie par million, à quelques dizaines de ppm. On citera le sélénium, incorporé à des doses inférieures ou égales à 0,5 ppm, et la robénidine, incorporée entre 30 et 66 ppm.

Quant à la dilution d'un tel composant sur un support, elle peut varier de quelques pour cent à 30% de concentration en produit actif.

C'est la raison pour laquelle de tels produits ne peuvent être distribués tels quels dans les élevages.
Ils sont réservés exclusivement à l'industrie de fabrication des aliments pour animaux, dont les équipements sophistiqués peuvent assurer un mélange homogène de l'ensemble des constituants de l'aliment complet, après plusieurs étapes successives de dilution.

Les produits couramment utilisés contiennent une substance active communément appelée " additif " et dont l'emploi est régi par la réglementation. Ce peut être une vitamine, un facteur de croissance, un antibiotique, un coccidiostat, etc.
Ils peuvent également contenir, pour une utilisation thérapeutique particulière, une " substance à caractère médicamenteux "

La plupart des molécules organiques utilisées en alimentation animale en qualité d'additif ou de substance à caractère médicamenteux sont fabriquées sous forme de poudres très fines. Elles sont souvent vendues sous cette forme, tout particulièrement lorsqu'il s'agit de génériques, remplacant les molécules tombées dans le domaine public. Par ailleurs, les matières premières inorganiques et tout particulièrement les oligo-éléments sont finement broyés après fabrication, le plus souvent afin d'améliorer leur assimilation par l'animal.

L'inconvénient principal de ces produits de plus en plus utilisés est qu'ils donnent lieu à des dégagements de poussières importants lors des manipulations.
Cette aptitude à la formation de poussières est notamment due à la faible taille des particules des additifs ou des substances à caractère médicamenteux, ainsi qu'à leur faible dureté, donnant lieu à une réduction sensible de la granulométrie de départ par friction avec les autres constituants dans les opérations de dilution et de mélange. Ce dégagement de poussières présente un certain nombre d'inconvénients qui sont détaillés dans ce qui suit.

Tout d'abord, le personnel manipulant ces produits peut inhaler une certaine quantité de produit actif, avec les risques pour la santé que certains d'entre eux peuvent présenter, notamment au niveau des voies respiratoires.

Un autre inconvénient du dégagement des poussières réside dans le fait qu'il est très difficile d'obtenir des mélanges sous une forme très homogène.
En effet, lors du processus de fabrication d'un aliment pour les animaux, la totalité des différentes matières premières destinées à couvrir l'intégralité des besoins nutritionnels de l'animal sont mélangées dans des équipements industriels appelés mélangeurs, qui brassent les composants du mélange pendant un temps déterminé.
Les matières premières traditionnellement utilisées et qui représentent un pourcentage élevé de la formule, telles que les céréales et leurs dérivés, ou les tourteaux, ont, après broyage, une granulométrie très largement supérieure à celle des additifs ou à celle des substances à caractère médicamenteux.

Ces derniers ont alors tendance à ne pas se répartir parfaitement en se " noyant " dans la totalité des constituants de la formule, ce qui aboutit à des mélanges peu homogènes. Il en résulte que des teneurs en additifs ou en substances à caractère médicamenteux essentiels peuvent s'écarter de la valeur désirée dans une ou plusieurs fractions du mélange préparé.

Les mélanges en alimentation animale sont effectués par lots de plusieurs tonnes, alors qu'à certains stades de leur croissance, les animaux ne consomment que quelques grammes de nourriture par jour, dans lesquels il est indispensable de trouver l'ensemble des ingrédients qui leur sont indispensables.
Un sur-dosage ou un sous-dosage peut alors entraîner des conséquences néfastes pour l'animal.
C'est d'ailleurs une des raisons pour lesquelles la réglementation fixe de façon très stricte les teneurs en additifs ou en substances à caractère médicamenteux qui doivent être retrouvées à l'analyse dans quelques grammes d'échantillon représentatif des mélanges d'aliments complets fabriqués dans les usines.

Un autre inconvénient des mélanges d'aliments contenant des produits poussiéreux est lié au fait que les lots fabriqués, une fois homogénéisés, sont pratiquement systématiquement transférés dans l'usine de fabrication par des systèmes de manutention mécanique ou pneumatique, vers de multiples destinations, sans qu'aucune opération complémentaire de mélange ne soit réalisée.
Au cours de ces opérations, un déclassement des constituants du mélange peut se produire, lorsque les granulométries sont nettement différentes. Les particules les plus fines peuvent se concentrer dans une partie seulement du lot, en détruisant l'homogénéité éventuelle obtenue initialement.
Ce phénomène est particulièrement fréquent lorsque les mélanges sont distribués aux animaux sous forme de farine. L'aliment peut alors se déclasser au cours du conditionnement en sacs ou au cours du transport en vrac dans les camions de livraison, ou enfin au cours de l'utilisation dans les élevages, notamment pendant le transfert des silos vers les trémies d'alimentation.

Un autre inconvénient de certains additifs ou substances à caractère médicamenteux est qu'ils présentent un caractère électrostatique marqué.
Dans ces conditions, les particules électrostatiques ont tendance à migrer au sein des mélanges qui les contiennent pour venir se coller contre les parois métalliques des appareils de mélange ou de manutention.
Cette fixation des particules est toutefois un phénomène relativement fragile et réversible.
Il en résulte que le produit fixé peut être déplacé vers un lot préparé ultérieurement dans le même appareil ou transporté par le même circuit.
Ce phénomène de fixation augmente considérablement les risques de contamination d'un lot par le lot suivant, désignée par le terme de " contamination croisée " Cette contamination croisée peut se traduire par la présence d'un additif ou d'une substance à caractère médicamenteux dans un aliment alors que la formule attendue ne le prévoyait pas.

Or de nombreuses substances de ce type peuvent être extrèmement toxiques pour certaines espèces animales, à partir de niveaux de concentration extrèmement faibles, de l'ordre de quelques ppm, ou parties par million.
Par exemple ont été rapportées la toxicité aiguë du cuivre pour le mouton, de la salinomycine pour le dindon, le lapin, les équidés, de la nicarbazine pour les volailles pondeuses, de l'halofuginone pour le lapin et les équidés, du dimétridazole pour les palmipèdes, etc.

Enfin, il est connu que les poussières émises par certains produits, dans des conditions déterminées de concentration dans l'atmosphère, peuvent être inflammables et/ou explosives.

Ainsi, un prémélange ou aliment qui contiendraient certains de ces produits, et qui serait transporté par un circuit de manutention pneumatique, pourrait engendrer l'accumulation de poussières électrostatiques dans les cyclones de décompression ou sur les manches en tissu des filtres automatiques utilisés, avec libération ultérieure de poussières nocives. Des recherches ont par conséquent été menées pour développer des produits industriels contenant des additifs, ne dégageant pas de poussières et/ou de possédant pas de charge électrostatique élevée.

Par exemple le brevet italien 1 046 986 décrit l'utilisation d'une huile non toxique en tant que produit anti-poussières pour la préparation d'un produit en poudre contenant un agent anti-bactérien, le quinoxaline-1,4-dioxyde.
Cependant, l'homogénéité d'un aliment qui contiendrait le mélange cité est difficile à atteindre, l'huile utilisée réduisant de façon sensible la fluidité de la préparation. De plus, le caractère électrostatique du mélange cité n'est pas amélioré.
Par ailleurs, dans la période de stockage qui sépare la fabrication de l'emploi du produit, période qui peut atteindre plusieurs mois, l'huile peut migrer peu à peu à l'intérieur des supports utilisés en relibérant la poussière de l'additif.
Ce dernier point est d'ailleurs à mettre en corrélation avec le fait que les additifs organiques, les additifs inorganiques ou les substances à caractère médicamenteux qu'il convient de traiter contre le dégagement de poussières ne sont pratiquement jamais liposolubles.
Enfin, au cours du stockage, l'huile peut s'oxyder et générer des dérivés toxiques et/ou inappétents, tout particulièrement en présence d'oligo-éléments jouant le rôle de catalyseur dans le processus d'oxydation.

Le brevet européen 0 197 188 A1 décrit l'utilisation d'un additif anti-poussières contenant un tensioactif non ionique physiologiquement acceptable.
A titre d'exemple, un tel produit peut être un monoester de propylène glycol et d'acide gras alimentaire ou du ricinoléate de glycéryle polyéthylène glycol.
Ce tensioactif est associé à d'autres substances.
On mentionne ainsi, pour traiter un facteur de croissance, le carbadox, dilué à 10% sur un support, l'incorporation de 15 kilogrammes par tonne de ricinoléate de glycéryle polyéthylène glycol associé à 35 kilogrammes par tonne de propanediol-1,2. Ces additifs anti-poussières sont donc incorporés à des taux relativement élevés. Comme ils présentent l'inconvénient d'être chers, ils augmentent de ce fait le prix de revient des mélanges fabriqués.
Par ailleurs, les additifs anti-poussières décrits dans ce brevet possèdent une valeur nutritive faible, voire nulle.
Enfin, dans certaines conditions, et au cours du stockage, il peut y avoir redégagement de poussières par le produit actif traité, qui n'est pas solubilisable dans l'agent tensioactif.

La demande de brevet allemand 2 045 343, datant de 1969, décrit l'utilisation d'un additif anti-poussières contenant un mélange de différents émulsifiants choisis dans deux groupes distincts ayant une balance hydrophile/lipophile ( dites BHL ) soit faible soit élevée.
On traite séparément le produit actif avec un émulsifiant à valeur BHL élevée, puis le support choisi avec un émulsifiant à valeur BHL faible. On mélange ensuite ces deux fractions entre elles dans des proportions décrites.

A titre d'exemple, on décrit le traitement du produit actif par une solution de monostéarate, ou de monolaurate, ou de monopalmitate de sorbitane de polyoxyéthylène, et le traitement du support par un mélange d'huile végétale et de monopalmitate ou de monostéarate, ou de monooléate de sorbitane.
Les critiques formulées à l'encontre du brevet EP 0 197 188 A1 s'appliquent à ce brevet. De plus, le prix du traitement est rendu élevé par la nécessité de sécher le produit actif après traitement;
Enfin, les inconvénients de l'utilisation d'une huile ont été développés antérieurement.

Le brevet allemand 41 17 399 A1 décrit l'utilisation d'un agent aqueux anti-poussières constitué d'un mélange de mélasse et de polymères physiologiquement neutres tels que des gommes, des dérivés de la cellulose, ou des dérivés de l'amidon, par exemple les dextrines.

Ce brevet revendique le traitement de minéraux de faible granulométrie, destinés à être distribués directement aux animaux dans les élevages, en particulier dans les élevages bovins de production du lait.
De tels minéraux sont mélangés à la ferme avec les constituants de la ration de base des animaux. On indique que le traitement anti-poussières doit éviter l'apparition de maladies respiratoires qui pourraient naître de l'inhalation du produit minéral par les animaux.
Ce brevet a donc un domaine d'application tout à fait distinct de celui de la présente invention qui concerne des produits à utiliser exclusivement par les fabricants industriels d'aliments pour animaux.

La mélasse est un produit issu de la fabrication du sucre, et qui contient de nombreux composants
C'est un produit largement utilisé dans l'alimentation des bovins, tout particulièrement parce qu'il favorise la consommation des aliments distribués. Mais il est difficile d'utiliser des taux significatifs de mélasse dans l'alimentation des volailles, des porcs, ou d'autres espèces animales. On se heurte en effet au caractère diarrhéique du produit, principalement lié à la présence des sels de potassium dans le milieu.
C'est aussi un produit facilement fermentescible et qui contient classiquement des microorganismes capables de se développer dans certaines conditions de dilution et de température.

Le brevet cité indique que la mélasse, pendant l'opération de mélange avec les produits à traiter, forme une enveloppe autour des différentes particules minérales, mais que son efficacité se trouve limitée dans le temps par évaporation de l'eau qu'elle contient. Les agents utilisés conjointement avec la mélasse agissent par leurs propriétés collantes dues en grande partie à leur viscosité élevée. On indique qu'ils forment une couche élastique entourant les différentes particules.
Les matières premières utilisées pour les mélanges de minéraux indiqués sont presque exclusivement constitués de carbonate de calcium, de phosphates de calcium, et de magnésie. Ce sont des produits peu ou pas solubles dans l'eau. Ce sont essentiellement les éléments poussiéreux qu'ils contiennent que l'on cherche à traiter. Et on constitue une enveloppe élastique autour des particules, qui ne pénètre pratiquement pas dans les produits et qui colle les autres éléments poussiéreux du mélange.

Pour éviter la réversibilité du phénomène, on est conduit à incorporer des quantités relativement élevées des agents anti-poussières revendiqués. On obtient alors avec un mélange de minéraux un produit final qui reste collant en surface et qui n'est pas fluide.

Un tel produit manque de fluidité et n'a pas l'aptitude à l'homogénéisation que l'on impose aux produits destinés à être mélangés industriellement pour fabriquer un aliment complet.
Cette méthode convient bien au domaine d'application revendiqué, mais elle ne pourrait être transposée à la fabrication industrielle des produits concernés par la présente invention.

L'invention a pour principal objet de remédier en grande partie aux inconvénients décrits dans ce qui précède, en proposant un nouveau mélange en poudre, qui est une substance active pulvérulente, organique ou inorganique, mise sur un support dont les particules ont une densité et une granulométrie homogènes, qui a une bonne fluidité, et qui ne dégage pas de poussières.

Pour la commodité du langage, on désignera dans le cadre de la présente demande de brevet:
* par " substance active " une matière première organique ou inorganique pulvérulente appartenant réglementairement à la famille des additifs autorisés en alimentation animale, ou à celle des substances à caractère médicamenteux. Il peut s'agir également d'un composé nutritionnel reconnu comme tel en alimentation animale, qui soit naturel ou obtenu notamment par synthèse ou fermentation.
* par " substance active pulvérulente " un produit dont la taille des particules offre une proportion notable inférieure à 100 microns.
* par " produit anti-poussières " un produit capable d'éliminer le dégagement de poussières et/ou d'inhiber les charges électrostatiques.

Selon l'invention, le mélange en poudre, qui est une substance active pulvérulente organique ou inorganique, mise sur un support dont les particules ont une densité et une granulométrie homogènes, qui a une bonne fluidité, et qui ne dégage pas de poussières, se caractérise en ce qu'il comprend de plus une solution aqueuse d'un ou plusieurs produits anti-poussières choisis parmi les produits autorisés en alimentation animale, qui ne sont ni des lipides, ni des glucides, ni des tensioactifs, ni des émulsifiants.

Selon l'invention, la substance active pulvérulente appartient à de nombreuses classes de produits autorisés. A titre d'exemples non limitatifs, on citera:
* les facteurs de croissance, tels que le carbadox ou l'olaquindox.
* les vitamines, les provitamines ou substances à effet analogue, telles que la thiamine, la riboflavine, la pyridoxine, l'acide folique.
* les oligo-éléments finement broyés, tels que les sels de cobalt, les iodures ou iodates, les sels de sélénium.

* les antibiotiques, tels que la tylosine.
* les acides aminés, tels que la méthionine, la lysine, la thréonine.
* les extraits végétaux riches en pigments, tels les extraits de taygetes, de luzerne, de piment ou de paprika, ou les matières colorantes telles que le bleu patenté V, le vert acide brillant BS.
* les coccidiostatiques et autres substances médicamenteuses, tels que le dinitolmide, le méticlorpindol, le monensin-sodium, la robénidine, la salinomycine-sodium, la nicarbazine, le nifursol.
* les substances à usage thérapeutiques, tels que l'amoxycilline.
* certaines substances d'origine végétale, telles que les tannins, les pulpes de caroube dites micronisées.

Les produits décrits ci-dessus peuvent être utilisés seuls ou en mélanges, et sont présentés conformément à la réglementation en vigueur.
Le taux d'incorporation de la substance active pulvérulente dans le produit concerné par l'invention varie entre environ 2% et environ 25% en poids.

Selon l'invention, le support peut être un produit utilisé seul ou en mélange avec des produits de même nature. Le ou les supports ont des caractéristiques bien déterminées:
* les supports sont sous forme de poudres et peuvent être organiques, inorganiques, d'origine végétale, minérale, obtenus à partir de matières premières naturelles, de synthése ou de fermentation. Les supports peuvent avoir été broyés.
* les supports doivent avoir une granulométrie la plus homogène possible et compatible avec une bonne aptitude à l'homogénéisation. La majorité des particules doit être comprise dans une fourchette relativement étroite de variation, par exemple entre 150 et 250 ppm. Les supports peuvent avoir été tamisés.
* la densité des particules des supports doit être homogène pour apporter une bonne aptitude à l'homogénéisation. La densité apparente doit être comprise entre 0,7 et 1,2.
* les supports doivent avoir une teneur en humidité inférieure à environ 10% en poids, de préférence inférieure à environ 5% en poids. L'intérêt de cette caractéristique est développé plus loin.

Eventuellement, le support peut avoir subi une opération de séchage.
* les supports doivent avoir des caractéristiques physico-chimiques telles qu'ils puissent être facilement solubles dans l'eau. L'intérêt de cette caractéristique est développé plus loin.
* à titre d'exemples non limitatifs de supports utilisables, on citera certaines farines de céréales ou leurs dérivés, les glutens, les poudres minérales broyées naturelles ou chimiques.
* selon une forme de réalisation préférée de l'invention, le support est constitué par un chlorure de sodium séché de faible granulométrie.

Selon l'invention, le produit anti-poussières est une solution aqueuse d'un ou plusieurs produits choisis parmi les produits autorisés en alimentation animale, qui ne sont ni des lipides, ni des glucides, ni des tensioactifs, ni des émulsifiants.
* on ne fait pas appel aux lipides, et plus particulièrement aux huiles, pour les raisons développées plus haut ( voir commentaires des brevets 1 046 986 et 2 045 343 )
* on ne fait pas appel aux glucides, et plus particulièrement à la mélasse, pour les raisons développées plus haut ( voir commentaire du brevet 41 17 399 A1)
* on ne fait pas appel aux tensioactifs, ou à des produits tels que les émulsifiants, pour les raisons développées plus haut ( voir commentaires des brevets 41 17 399 A1 -- 2 045 343 -- 0 197 188 A1)

Selon l'invention, la solution aqueuse de produit anti-poussières est choisie parmi les substances autorisées en alimentation animale ou les produits alimentaires naturels ou préparés industriellement et obtenus par synthèse ou fermentation.

Avantageusement, la solution aqueuse de produit anti-poussières a une teneur en eau supérieure à environ 10%, de préférence variant entre environ 15% et environ 40% en poids.

On citera à titre non limitatif de solution aqueuse de produit anti-poussières utilisable dans le cadre de la présente invention le chlorure d'hydroxy-2-éthyl-triméthylammonium, de formule brute C₅H₁₄ClNO, encore appelé chlorure de choline, disponible industriellement sous forme d'une solution aqueuse à 70% ou 75% de concentration, pratiquement neutre, et utilisable sans restriction pour toutes les espèces animales
D'autres produits anti-poussières utilisables dans le cadre de la présente invention comprennent des agents conservateurs autorisés sans restriction en alimentation animale, tels que des acides organiques, ou des sels d'acides organiques, par exemple l'acide lactique, disponible industriellement sous forme de solutions aqueuses à 80% ou 90%.

Si les produits sont disponibles industriellement sous forme de poudre, ou sous forme liquide à faible teneur en eau, on pourra constituer des solutions aqueuses à concentration désirée compatible avec leur solubilité, par exemple à partir d'acide citrique ou de propionate de sodium en poudre, ou à partir d'acide propionique liquide.

On pourra de même augmenter, si nécessaire, la teneur en eau des solutions aqueusesdisponibles industriellement afin d'obtenir l'effet désiré.

Selon une forme préférée de l'invention, le produit en poudre fabriqué peut comprendre de plus un ou plusieurs agents anti-oxygènes, destinés, si nécessaire, à protéger la substance active pulvérulente contre l'oxydation.

Avantageusement, l'agent anti-oxygène est choisi parmi tout produit ou mélange de produits agissant en synergie pour faire obstacle à l'oxydation.

Le taux d'incorporation d'un agent anti-oxygène varie entre environ 150 ppm, ou partie par million, et environ 1.000 ppm.

Le nouveau mélange en poudre, ( qui est une substance active organique ou inorganique pulvérulente, mise sur un support dont les particules ont une densité et une granulométrie homogènes, qui a une bonne fluidité, et qui ne dégage pas de poussières ), est obtenu par l'application d'une idée inventive originale

Dans les brevets cités et détaillés antérieurement, on recherche à constituer à la surface des particules du support une enveloppe collante fixant la substance active pulvérulente. Le support, de par sa nature, décrite dans chaque brevet, n'absorbe pas ou peu l'agent anti-poussières.
L'agent anti-poussières doit ensuite conserver ses caractéristiques adhésives au cours du stockage et des manipulations du produit fini, ce qui n'est pas facile à obtenir, surtout en présence des nombreux ingrédients broyés d'une formule d'aliment pour les animaux. Dans un seul des brevets cités, il y a effectivement pénétration de l'huile dans le support végétal, mais il ne s'agit que d'un phénomène de migration du liquide dans un support plus ou moins poreux, ce qui a pour résultat de relibérer les poussières collées.

Le produit concerné par l'invention est constitué d'un support à faible taux d'humidité, et dont les caractéristiques physico-chimiques sont telles qu'il puisse facilement être solubilisé par l'eau.

Lorsque le support est mis en présence d'une solution aqueuse du produit anti-poussières, il se produit dans la couche externe de chaque grain une solubilisation d'autant plus marquée que le support est un produit généralement séché, à faible taux d'humidité, captant facilement l'eau.
La couche externe de chaque grain se liquéfie et/ou se transforme en état pâteux.

De la partie la plus superficielle jusqu'au coeur de chaque grain la teneur en eau du milieu suit un gradient décroissant, le milieu passant de l'état liquide à l'état pâteux, puis à l'état caractérisant le produit original.

On peut facilement orienter l'épaisseur de la zône liquide et de la zône à l'état pâteux en jouant sur la quantité de solution aqueuse mise en présence du support, et on peut également orienter la viscosité de la couche superficielle des particules en jouant sur la concentration du produit anti-poussières dans la solution aqueuse qui le contient. En effet, le produit anti-poussières lui-même a des propriétés physiques modifiées par l'appauvrissement relatif en eau de la solution qui le contient.
Et il en résulte généralement une augmentation de sa viscosité.
Cet ensemble de phénomènes permet de capter les particules de la substance active pulvérulente dans l'opération de mélange décrite plus loin, au cours de laquelle les particules de support roulent les unes sur les autres.

Les phénomènes d'échange de l'eau dans les différentes couches du grain de support, avec essentiellement une migration de l'eau vers le coeur du grain, appauvrissent peu à peu en eau les couches superficielles.

La substance active pulvérulente reste captée dans une sorte de gangue formée dans la couche externe du support et qui résiste bien aux phénomènes d'abrasion.

Il existe de ce fait un taux de saturation de la substance active pulvérulente. On fixe toutefois, selon les produits, jusqu'à 25% de substance active, ce qui correspond parfaitement à l'usage réservé au produit fini. Les autres brevets cités ont également des valeurs de saturation comparables.

Le produit obtenu, objet de la présente invention, a un aspect proche de celui du support sélectionné.
Il conserve en particulier une granulométrie régulière.
Il conserve en particulier une fluidité proche de celle du support seul.

Sa densité, sa granulométrie et sa fluidité le rendent tout particulièrement apte à une bonne homogénéisation avec les constituants des aliments pour animaux.

Le phénomène décrit explique un des intérêts fondamentaux de l'idée inventive.

Pratiquement tous les produits pulvérulents peuvent être captés dans la gangue formée dans la couche externe du support. Peu importe qu'ils soient ou non hydrosolubles, puisqu'il s'agit d'un captage par collage.

La substance active pulvérulente pourra se libérer ensuite en totalité de son support hydrosoluble après ingestion par l'animal.

Par ailleurs, et toujours en faveur de l'idée inventive, le phénomène décrit est facilement obtenu avec des taux très faibles de solution aqueuse anti-poussières.

Ainsi, on mentionne dans le brevet 0 197 188 Al l'utilisation, par tonne de produit fini fabriqué, de cinquante kilogrammes de produit de traitement, dont quinze kilogrammes de ricinoléate de glycéryle polyéthylène glycol.
A titre d'exemple comparatif, on obtient dans la présente invention, une protection contre le dégagement de poussières avec seulement deux kilogrammes et demi de produit anti-poussières par tonne de produit fini fabriqué , ainsi qu'il est expliqué dans un des exemples donnés plus loin, soit 20 fois moins en poids.

Compte tenu des prix courants des produits sur le marché le coût du traitement est réduit de façon très sensible.
Dans les exemples cités, le coût du traitement concerné par l'invention représente environ 10% du coût indiqué dans le brevet cité à titre de comparaison.

Selon l'invention, le produit anti-poussières est ajouté avantageusement à une dose variant entre environ 0,1% et environ 1% en poids, de préférence entre environ 0,1% et environ 0,5% par rapport au poids du support

L'invention concerne également un procédé de préparation d'un nouveau mélange en poudre, qui est une substance active organique ou inorganique pulvérulente, mise sur un support dont les particules ont une densité et une granulométrie homogènes, qui a une bonne fluidité, et qui ne dégage pas de poussières.

Selon l'invention, la substance active pulvérulente, le support et le produit anti-poussières sont tels qu'ils ont été définis dans ce qui précède.

Le procédé de fabrication se caractérise en ce qu'il fait appel à un mélangeur mécanique par charges.
Ce mélangeur comprend un rotor pouvant tourner dans une cuve métallique fixe de forme identique.
Des spires, des vis, des pales, ou des sabots en forme de soc de charrue font partie intégrante du rotor.
Ils ont ajustés de façon à ce qu'au cours de la rotation du rotor ils passent passer le plus près possible de la cuve
Ils ont pour fonction de brasser l'ensemble des constituants du lot à mélanger afin de les homogénéiser avec le plus de précision possible.

Avantageusement, on utilisera un mélangeur horizontal avec rotor en forme de soc de charrue, tel qu'il existe sur le marché, fabriqué par la société allemande LODIGE

Les différents composants du mélange sont pesés avec précision.
Ils sont ensuite incorporés dans le mélangeur, selon des proportions bien déterminées Les poudres sont incorporées gravitairement, les liquides sont pulvérisés.

Selon l'invention, le mélangeur doit assurer au cours de la rotation du rotor un brassage régulier des particules du support afin qu'elles puissent s'imprégner de la solution aqueuse anti-poussières, en transformant la zône superficielle des particules en état liquide ou pâteux..

L'opération de mélange étant poursuivie par la rotation du rotor dans la masse du produit, on ajoute la substance active pulvérulente.

Ces deux opérations de brassage sont menées pendant un temps déterminé correspondant à un certain nombre de tours de rotation du rotor.

On peut sans inconvénient majeur inverser l'ordre d'incorporation des ingrédients, en versant dans l'ordre le support, la substance active pulvérulente et le produit anti-poussières.

Le produit obtenu, concerné par l'invention, est extrait du mélangeur par gravité et immédiatement conditionné en sacs réglés fermés hermétiquement avec une bande de papier recouvrant le fil de couture. Le produit obtenu est stocké dans les conditions habituelles d'une usine.

Des avantages et caractéristiques supplémentaires de l'invention apparaîtront encore à la lumière de la description plus détaillée qui suit de modes de réalisation de l'invention, donnés à titre purement illustratif et non limitatif.

### Exemple 1

Mélangeur LODIGE, capacité utile 130 litres
Vitesse de rotation du rotor = environ 140 tours par minute
Support = 45 kilogrammes de sel fin calibré à environ 200 microns et séché, avec une humidité résiduelle inférieure à 3%
Produit anti-poussières = 125 grammes de chlorure de choline en solution aqueuse à 75%
Substance active pulvérulente = 5.000 grammes d'olaquindox " feed grade ", de pureté environ 100%, et pulvérulent
Brassage après l'introduction du produit anti-poussières assuré par 400 tours de rotor

Aspect du produit obtenu
Poudre fluide de coloration uniforme jaunâtre.

Contrôle de l'homogénéité en olaquindox du produit:
Contrôle des teneurs sur 10 échantillons représentatifs, avec dosage de l'olaquindox.
Teneur moyenne proche de 10%. Ecart-type inférieur à 5%

Contrôle du dégagement de poussières
Utilisation du test SAUBER-HEUBACH.
Détermination du résidu sur filtre pour cinq essais successifs
Dosage de l'olaquindox sur filtre par H.P.L.C., ou chromatographie liquide à haute pression
Résultats en olaquindox inférieurs à 0,1 microgramme

Stabilité dans le temps
Mesure au test SAUBER-HEUBACH après 2 et 4 semaines de stockage en emballages intacts, dans des conditions normales de chaleur et d'humidité ambiantes
Pas de variation décelable par rapport au test initial.

### Essai comparatif 1'

On reprend l'essai à l'identique, mais sans introduction de produit anti-poussières.

Le produit n'a pas le même aspect homogène que dans ce qui précède, et montre que les poussières d'olaquindox adhérent pas ou peu aux particules de support.

Le test SAUBER-HEUBACH donne une valeur inacceptable, supérieure à 2 mg sur le filtre.

### Exemple 2

Conditions opératoires rigoureusement identiques.
support = sel fin séché ( 37.500 grammes )
substance active pulvérulente = sulfate de cobalt heptahydraté, finement broyé ( 12.500 grammes )
produit anti-poussières = acide lactique à environ 90% de pureté, et contenant environ 10% d'eau (100 grammes)

Aspect du produit fini
Grains de taille homogène, de granulométrie moyenne proche de 200 microns, et fluides.
Coloration uniforme rose

Test de SAUBER-HEUBACH = moins de 0,1 microgramme de cobalt sur le filtre

## Revendications

1. Nouveau mélange en poudre, destiné exclusivement à la fabrication industrielle d'aliments composés pour les animaux, comprenant une substance active pulvérulente, organique ou inorganique, mise sur un support dont les particules ont une densité et une granulométrie homogènes, qui a une bonne fluidité, et qui ne dégage pas de poussières, et caractérisé en ce qu'il comprend de plus une solution aqueuse d'un ou plusieurs produits anti-poussières, choisis parmi les produits autorisés en alimentation animale, qui ne sont ni des lipides, ni des glucides, ni des tensio-actifs, ni des émulsifiants.

2. Mélange selon la revendication 1, caractérisé en ce que la solution aqueuse de produit anti-poussières possède une teneur en eau supérieure à environ 8%, de préférence variant entre environ 10% et environ 40% en poids

3. Mélange selon la revendication 1 ou 2, caractérisé en ce que le produit anti-poussières est le chlorure d'hydroxy-2-éthyl-triméthylammonium.

4. Mélange selon la revendication 1 ou 2, caractérisé en ce que les produits anti-poussières sont choisis notamment parmi les agents conservateurs, tels que les acides organiques, leurs dérivés et/ou leurs mélanges.

5. Mélange selon l'une quelconque des revendications 1 à 4, caractérisé en ce que le support est choisi parmi les produits en poudre ou susceptibles d'être mis en poudre, de qualité alimentaire, organiques ou inorganiques, d'origine végétale ou minérale, obtenus à partir de matières premières naturelles, de synthèse ou de fermentation, est constitué de particules de granulométrie homogène, comprises en majorité entre 150 et 250 microns, doit avoir une humidité inférieure à environ 10% en poids, de préference inférieure à environ 5% en poids, et doit avoir des caractéristiques physico-chimiques telles qu'il soit facilement soluble dans l'eau.

6. Mélange selon l'une quelconque des revendications 1 à 5, caractérisé en ce que le support est le chlorure de sodium séché de faible granulométrie.

7. Mélange selon l'une quelconque des revendications 1 à 5, caractérisé en ce que le support est choisi notamment parmi les farines de céréales et leurs dérivés, les glutens, les poudres minérales broyées naturelles ou chimiques.

8. Mélange selon l'une quelconque des revendications 1 à 7, caractérisé en ce que la substance active pulvérulente est choisie parmi les produits autorisés en alimentation animale appartenant à la classe des additifs ou à celle des substances à caractère médicamenteux.

9. Mélange selon l'une quelconque des revendications 1 à 8, caractérisé en ce que la substance active pulvérulente est choisie dans le groupe comprenant les facteurs de croissance, les vitamines, les provitamines, les oligo-éléments, les antibiotiques, les acides aminés, les extraits végétaux riches en pigments, les substances colorantes, les coccidiostatiques, les substances à usage thérapeutique, certaines substances alimentaires, ainsi que les dérivés de ces produits.

10. Mélange selon l'une quelconque des revendications 1 à 9, caractérisé en ce qu'il peut comprendre un ou plusieurs agents anti-oxygènes

11. Mélange selon l'une quelconque des revendications 1 à 10, caractérisé en ce que le produit anti-poussières est ajouté à une dose variant entre environ 0,1% et environ 1% en poids, de préférence entre environ 0,1% et environ 0,5% par rapport au poids du support

12. Mélange selon l'une quelconque des revendications 1 à 11, caractérisé en ce que l'agent anti-oxygène est éventuellement présent en une quantité variant de 150 à 1.000 ppm, ou partie par million, par rapport au poids du mélange.

13. Mélange selon l'une quelconque des revendications 1 à 12, caractérisé en ce que la substance active pulvérulente est présente dans le mélange final en une quantité variant entre environ 2% et environ 25%

14. Procédé de préparation d'un nouveau mélange en poudre, destiné exclusivement à la fabrication industrielle d'aliments composés pour les animaux, comprenant une substance active pulvérulente, organique ou inorganique, mise sur un support dont les particules ont une densité et une granulométrie homogènes, caractérisé en ce qu'on ajoute, dans un mélangeur contenant le support une solution aqueuse d'un ou plusieurs produits anti-poussières, choisis parmi les produits autorisés en alimentation animale, qui ne sont ni des lipides, ni des glucides, ni des tensio-actifs, ni des émulsifiants, puis la substance active pulvérulente de façon à obtenir un mélange homogène qui ne dégage pas de poussières.

15. Procédé selon la revendication 14, caractérisé en ce que la solution aqueuse de produit anti-poussières possède une teneur en eau supérieure à 8%, de préférence variant entre environ 10% et 40% en poids.

16. Procédé selon la revendication 14 ou 15 caractérisé en ce que la substance active pulvérulente est ajoutée avant l'introduction de la solution aqueuse anti-poussières dans le mélangeur

17. Procédé selon l'une quelconque des revendications 14 à 16 caractérisé en ce que la solution aqueuse anti-poussières et la substance active pulvérulente sont ajoutées dans le mélangeur en fonctionnement.

18. Procédé selon l'une quelconque des revendications 1 à 17, caractérisé en ce que les substances actives pulvérulentes, après traitement, peuvent être mélangées entre elles dans les conditions de compatibilité, et conformément à la réglementation en vigueur
